Europäisches Patentamt

European Patent Office

Office européen des brevets

(19)

(11) Numéro de publication: **0 089 858**
**A1**

# (12) DEMANDE DE BREVET EUROPEEN

(21) Numéro de dépôt: 83400001.0

(22) Date de dépôt: 03.01.83

(51) Int. Cl.³: **B 60 G 11/08**
**B 60 G 11/42, F 16 F 1/18**

(30) Priorité: 28.01.82 FR 8201343

(43) Date de publication de la demande:
28.09.83 Bulletin 83/39

(84) Etats contractants désignés:
DE GB IT SE

(71) Demandeur: SOCIETE NATIONALE INDUSTRIELLE
AEROSPATIALE
37 boulevard de Montmorency
F-75016 Paris Cedex 16(FR)

(72) Inventeur: Aubry, Jacques Antoine
2, avenue Marie Gasquet Domaine du Lac Bleu
F-13480 Cabries(FR)

(74) Mandataire: Bonnetat, Christian et al,
Cabinet PROPI Conseils 23 rue de Léningrad
F-75008 Paris(FR)

(54) Suspension élastique pour un train de deux roues d'un véhicule et lame élastique pour une telle suspension.

(57) Suspension pour un train de deux roues 2G, 2D d'un véhicule, comprenant une lame élastique (1) transversale audit véhicule, disposée à plat et s'étendant de façon continue sur toute la largeur du véhicule pour pourvoir supporter la partie inférieure de la fusée 20 d'une desdites roues à chacune de ses extrémités, des moyens amortisseurs étant prévus pour amortir les mouvements verticaux desdites roues.

Selon l'invention, cette suspension est caractérisée en ce que ladite lame (1) est en une seule pièce réalisée en une matière composite fibres-résine synthétique et est fixée sur le châssis (3) dudit véhicule par deux organes de fixation 4G, 4D espacés le long de la partie intermédiaire 1M de ladite lame et permettant la transmission des déformations verticales subies par chacune des extrémités 1G ou 1D de la lame de sorte que les déformations induites dans l'autre desdites extrémités soient de même sens et en ce que les moyens amortisseurs sont constitués par des amortisseurs télescopiques 7G, 7D disposés parallèlement au plan de la roue associée et reliant chacun au châssis (3) la partie supérieure d'une desdites fusées (20) de roue.

BAD ORIGINAL

./...

Fig. 4

0089858

## Suspension à lame élastique pour un train de deux roues d'un véhicule et lame élastique pour une telle suspension.

La présente invention concerne une suspension pour un train de deux roues d'un véhicule comprenant une lame élastique transversale audit véhicule disposée à plat et s'étendant de façon continue sur toute la largeur du véhicule pour pouvoir supporter la partie inférieure de la fusée d'une desdites roues à chacune de ses extrémités, des moyens amortisseurs étant prévus pour amortir les mouvements verticaux desdites roues. La suspension conforme à l'invention est tout particulièrement, quoique non exclusivement, appropriée à être utilisée comme suspension avant d'un véhicule automobile du type à traction avant.

Les suspensions de ce type connues sont relativement simples, mais présentent de nombreux inconvénients.

Tout d'abord, la lame élastique y est composée d'un ressort à lames d'acier, par exemple semi-elliptique. La raideur dans le sens vertical des extrémités d'un tel ressort à lames peut être ajustée dans une certaine mesure en choisissant le nombre des lames superposées et leur étagement. Cependant, un tel ajustage n'est guère facile et de plus la partie médiane du ressort est extrêmement rigide, car elle comporte la totalité des lames superposées. D'ailleurs, cette partie médiane rigide du ressort à lame est rigidement fixée au châssis du véhicule, de sorte que, même si elle pouvait présenter par elle-même une certaine souplesse, celle-ci serait empêchée de s'exercer par la fixation au châssis.

Ainsi, dans ces suspensions connues, les extrémités du ressort à lames présentent une certaine élasticité, mais elles sont isolées l'une de l'autre, du fait des rigidités de la partie médiane du ressort et de la fixation dudit ressort sur le châssis. Il n'y a donc aucun couplage élastique entre les deux extrémités du ressort. Par ailleurs, dans le sens longitudinal du véhicule, c'est-à-dire dans un plan horizontal, un tel ressort à lame est complètement rigide et ne présente aucune souplesse. Parmi les fonctions généralement exigées des suspensions, ces suspensions connues remplissent donc totalement la fonction de support inférieur de roue et partiellement celle de raideur verticale, mais sont incapables d'assurer la fonction de couplage anti-roulis entre les deux roues couplées et la fonction de raideur horizontale. Encore faut-il remarquer que les fonctions plus ou moins bien remplies ne le sont qu'au prix de grandes difficultés (il est difficile d'ajuster de façon précise la répartition de raideur le long des extrémités du ressort par empilement et étagement des lames d'acier) et d'un dimensionnement important du ressort d'acier, notamment en épaisseur.

Par ailleurs, ces suspensions connues exigent des organes spéciaux, par exemple des leviers triangulés, pour relier la partie supérieure de la fusée de roue au châssis.

La présente invention a pour objet de remédier à ces inconvénients, tout en simplifiant et en allégeant beaucoup la suspension à lame élastique. Elle permet d'éliminer les leviers triangulés ou analogues, d'obtenir une lame élastique de faible dimensionnement ayant une répartition de raideur désirée sur toute sa longueur, ainsi que d'assurer le couplage anti-roulis entre les deux extrémités de la suspension et la raideur horizontale.

A ces fins, selon l'invention, la suspension du type mentionné ci-dessus est remarquable en ce que ladite lame est en une seule pièce réalisée en une matière composite fibres-résine synthétique et est fixée sur le châssis dudit véhicule par deux organes de fixation espacés le long de la partie intermédiaire de ladite lame et permettant la transmission des déformations verticales subies par chacune des extrémités de la lame de sorte que les déformations induites dans l'autre desdites extrémités soient de même sens et en ce que les moyens amortisseurs sont constitués par des amortisseurs télescopiques disposés parallèlement au plan de la roue associée et reliant chacun au châssis la partie supérieure d'une desdites fusées de roue.

L'utilisation d'une matière composite fibres-résine synthétique
permet d'obtenir pour la lame des caractéristiques mécaniques
et élastiques particulièrement appropriées à l'application
de l'invention. De plus, les processus de fabrication
connus des objets en matière composite de ce type permettent
de donner à la lame élastique toute forme appropriée lui
communiquant sur sa longueur, une répartition de raideur
verticale et horizontale désirée. Dans un mode avantageux
de réalisation, la lame présente sur sa longueur, une
section de surface constante, mais une largeur et une
épaisseur variables. Par exemple, entre les deux organes de
fixation au châssis, la largeur, l'épaisseur et la surface
de la section sont constantes, tandis qu'entre chacun
desdits organes et l'extrémité correspondante l'épaisseur
augmente et la largeur diminue, alors que la surface de la
section reste constamment égale à celle de la partie
intermédiaire.

Ainsi, selon l'invention, la raideur verticale de la suspension
et le couplage anti-roulis sont obtenus grâce aux caractéristiques de raideur verticale de la lame répartie le long
de celle-ci et de raideur de transmission des deux organes
de fixation. Chacun de ceux-ci peut comporter un équipage
oscillant rendu solidaire de ladite lame et pouvant pivoter
autour d'un axe parallèle et transversal à la lame,
c'est-à-dire longitudinal par rapport au véhicule.

La lame de matière composite présente par ailleurs,
d'elle-même des propriétés satisfaisantes de raideur
horizontale. Cependant, pour pouvoir améliorer celles-ci,
il est avantageux que lesdits organes de fixation permettent
également la transmission des déformations horizontales
subies par une extrémité de la lame, au moins à la partie
intermédiaire de cette dernière comprise entre lesdits
organes de fixation et éventuellement à l'autre extrémité.
Dans ce cas, ledit équipage oscillant peut également se
déplacer le long dudit axe transversal à la lame. De préférence,

4

l'équipage oscillant de chaque organe de fixation comporte une chape traversée par ledit axe et celui-ci est relié au châssis par deux paliers coniques de conicités opposées, les parties desdits paliers associées audit axe étant constituées par des bagues traversées par celui-ci et des moyens de serrage étant prévus pour presser simultanément les bagues contre les parties desdits paliers associées au châssis et contre la chape, tandis que chacun des paliers coniques est choisi pour permettre un certain déplacement longitudinal de l'axe, même lorsque les bagues sont en appui contre les parties des paliers associées au châssis.

De plus, la présente invention concerne une lame élastique de rappel élastique et de couplage anti-roulis de deux roues d'un train de roues d'un véhicule, montées aux extrémités de ladite lame, cette lame étant remarquable en ce qu'elle est constituée d'une seule pièce d'une matière composite fibres-résine synthétique présentant, sur toute sa longueur, une section de surface constante, et, au moins à ses extrémités, une largeur et une épaisseur variables.

Les figures du dessin annexé feront bien comprendre comment l'invention peut être réalisée.

La figure 1 est une vue de face schématique d'une suspension selon la présente invention.

La figure 2 illustre schématiquement, en vue de face, le processus par lequel la lame élastique selon l'invention assure la raideur verticale de la suspension ainsi que, en coopération avec ses organes de fixation sur le châssis, le couplage anti-roulis des deux côtés de la suspension.

La figure 3 illustre schématiquement, en vue de dessus, le processus par lequel la lame élastique selon l'invention assure la raideur longitudinale (par rapport au véhicule), en coopération avec les organes de fixation de la suspension.

La figure 4 montre l'application de la présente invention à la réalisation de la suspension avant d'un véhicule automobile à traction avant. Pour des raisons de simplicité de dessin, seule la moitié gauche de la suspension est représentée sur cette figure, la moitié droite en étant symétrique.

La figure 5 est une vue de dessus de la lame élastique selon l'invention, montée dans la suspension de la figure 4.

La figure 6 est une coupe selon la ligne VI-VI de la figure 4, illustrant la fixation de ladite lame élastique sur le châssis.

Sur ces figures, des références identiques désignent des éléments semblables.

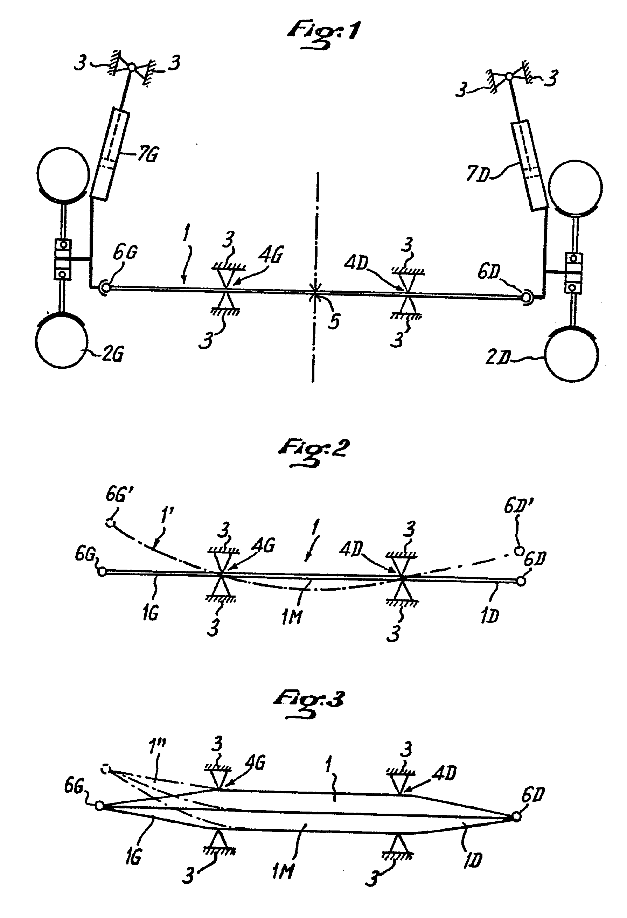

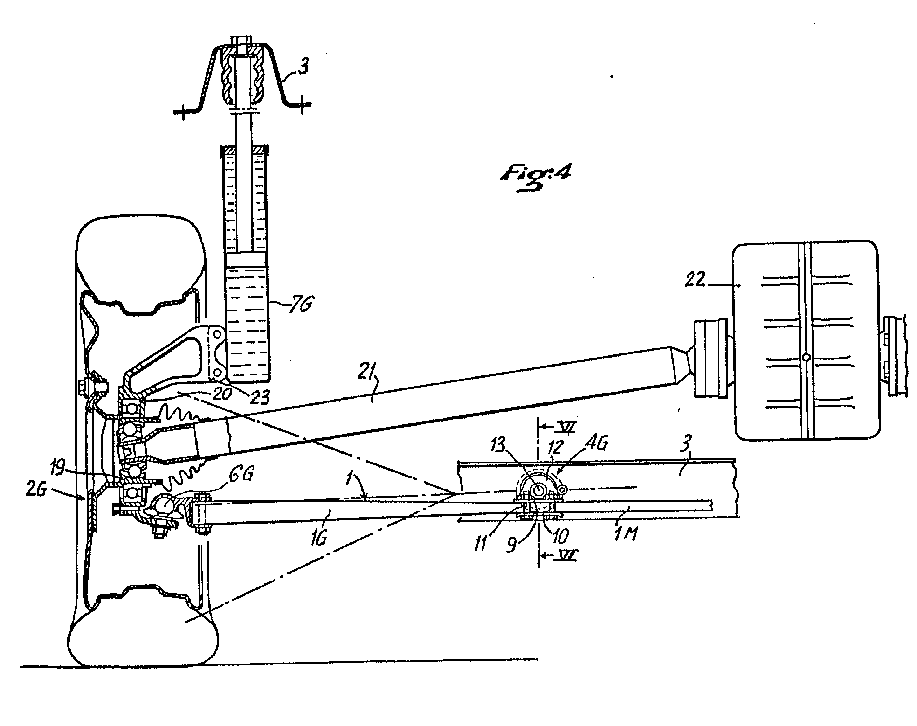

Comme le montrent schématiquement les figures 1 et 4, la suspension conforme à l'invention comporte une lame élastique 1, disposée transversalement au véhicule (non représenté) et reliant entre elles les deux roues associées d'un train avant ou arrière, par exemple la roue gauche 2G et la roue droite 2D d'un train avant.

La lame 1 est fixée sur le châssis 3 du véhicule par des organes intermédiaires 4G (disposé du côté gauche) et 4D (disposé du côté droit). Les appuis 4G et 4D sont disposés symétriquement l'un de l'autre par rapport au centre 5 de la lame 1 et leur écartement, qui est fonction des caractéristiques élastiques et mécaniques de la lame 1, est par exemple approximativement égal au tiers de la longueur totale de ladite lame.

A ses extrémités, la lame 1 sert de support inférieur aux roues 2G et 2D, par exemple par l'intermédiaire d'articulations 6G ou 6D respectives.

Par ailleurs, chaque roue 2G et 2D est reliée à la partie supérieure du châssis 3 par l'intermédiaire d'amortisseurs hydrauliques respectifs 7G ou 7D d'axes parallèles au plan de la roue associée, c'est-à-dire verticaux.

Comme l'illustre la figure 4, chaque amortisseur 7G ou 7D fait office de support supérieur pour la roue associée.

Selon l'invention, la lame 1 est réalisée en une matière composite constituée de fibres résistantes (verre, carbone, bore etc... ou un mélange de telles fibres) enrobées de résine synthétique et présente sur toute sa longueur une section transversale à surface constante. En revanche, afin d'obtenir le long de la lame la répartition de raideur désirée, pour l'application envisagée, la largeur et l'épaiss de la lame varient. Les figures 4 et 5 montrent que la lame 1 comporte une partie intermédiaire 1M à largeur et épaisseur constantes et deux parties d'extrémité gauche 1G ou droite 1D identiques dans lesquelles l'épaisseur et la largeur vont respectivement en croissant et en décroissant en direction de l'extrémité. Les organes de fixation 4G et 4D sont disposés aux extrémités de la partie 1M à largeur et épaisseur constantes, juste avant la transition 8 entre cette partie 1M et les parties d'extrémité 1G ou 1D, respectivement.

On remarquera que la propriété de la lame 1 de présenter une section à surface constante rend la réalisation de cette lame particulièrement aisée. En effet, il suffit de réaliser par superposition, au repliement ou enroulement de plis de tissus de fibres résistantes enrobées de résine polymérisable une lame souple d'épaisseur et de largeur constantes, puis par moulage et/ou pressage de donner à la lame sa forme définitive au moment de la polymérisation de la résine. On peut ainsi fabriquer les lames 1 en continu, puisqu'il n'est pas nécessaire de couper les tissus le long desdites lames.

Bien entendu, à l'endroit des organes de fixation 4G et 4D et des articulations 6G ,6D, la lame 1 peut être renforcée par exemple par un frettage circonférentiel réalisé soit après moulage et polymérisation de ladite lame, soit pendant le moulage.

Grâce au fait que l'on utilise une matière composite fibres-résine pour réaliser la lame 1, on obtient pour celle-ci un rapport $\dfrac{\text{contrainte à la rupture}}{\text{module d'élasticité}}$ présentant une valeur bien plus favorable que celle d'une lame d'acier ; on peut alors dimensionner convenablement la lame élastique 1 et mettre en oeuvre le concept de la présente invention.

Comme le montrent les figures 4 et 6, chaque organe de fixation 4G ou 4D comporte un ensemble de plaques 9,10 pressant entre elles ladite lame 1, grâce à des boulons traversant ladite lame par des trous 11'.

A sa partie supérieure, la plaque supérieure 9 est conformée en chape 12, traversée par un axe 13 parallèle et transversal à la lame 1 de façon que l'ensemble 1-9-10-12 puisse pivoter de façon limitée autour dudit axe 13. Celui-ci comporte à ses extrémités des portées coniques 14, coopérant avec des portées de palier coniques 15, solidaires du châssis 3.

L'axe 13 est conformé en vis à écrou et les portées coniques 14 sont des bagues traversées par ledit axe. De plus une entretoise 16 est prévue entre les branches de la chape 12. Ainsi, en serrant l'écrou 17 associé à l'axe 13, on presse entre ledit écrou et la tête 18 dudit axe, l'ensemble 12, 14,15,16 : les portées coniques 14 viennent en appui contre les portées complémentaires 15, tandis que la chape 12 et l'entretoise 16 sont pressées de chaque côté par les portées 14. Le serrage de l'écrou 17 permet donc la solidarisation de l'axe 13 sur le châssis 3. Cependant, cette solidarisation permet à l'axe 13 certains déplacements parallèlement à sa longueur par rapport audit châssis 3, car les portées de paliers 15 sont constituées d'une matière relativement élastique, telle qu'une matière lamifiée comportant des couches alternées souples, par exemple en caoutchouc, et rigides, par exemple en acier.

Ainsi, la lame 1 peut non seulement pivoter autour des organes de fixation 4G et 4D grâce aux axes 13, mais elle peut encore se déplacer de façon limitée, parallèlement aux axes 13 de ces paliers, c'est-à-dire transversalement à sa longueur. Au cours d'un tel déplacement transversal, un palier 14,15 est comprimé, tandis que l'autre est détendu. Par suite, dès que la cause du déplacement a disparu, la lame 1 est ramenée dans sa position d'équilibre pour laquelle les pressions exercées sur les deux paliers 14,15 sont égales.

On voit ainsi que, dans la suspension selon l'invention, les différentes fonctions sont assurées de la façon suivante :

- l'amortissement des mouvements verticaux et le support supérieur des roues 2G et 2D sont effectués par les amortisseurs hydrauliques télescopiques 7G et 7D ;

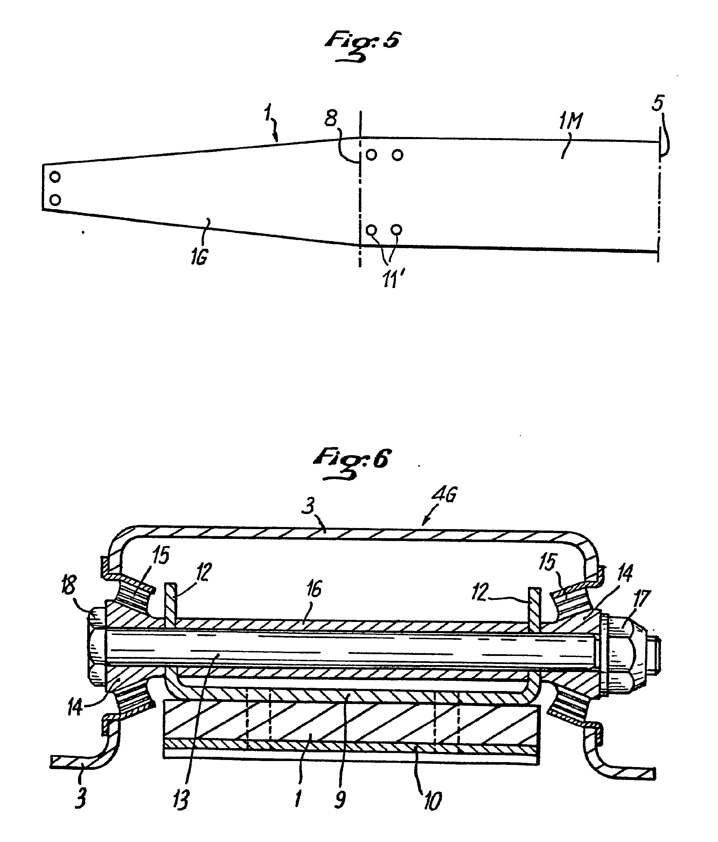

- la raideur verticale est assurée par l'élasticité de la lame 1 perpendiculairement à son plan (voir la figure 2), ainsi que par la raideur en rotation des chapes 12 autour de l'axe 13 correspondant). Par exemple, si la roue gauche 2G est soumise à des mouvements verticaux, les parties 1G et 1M de la lame 1 se déforment élastiquement, tandis que de plus la chape 12 de l'organe de fixation 4G tourne autour de l'axe 13 de celui-ci. La lame 1 se déforme dans le plan vertical pour prendre la position 1'.

- la déformation des parties 1G (ou 1D) et 1M de la lame 1 entraîne automatiquement le déplacement angulaire de la partie 1D (ou 1G) de cette lame 1 dans le même sens et la rotation de la chape 12 de l'organe de fixation 4D (ou 4G). Ainsi, un déplacement de l'articulation 6G en 6G' (ou de 6D en 6D') induit le déplacement de même sens de l'articulation 6D en 6D' (ou de 6G en 6G'). Il en résulte donc que la lame 1 réalise le couplage anti-roulis entre les deux côtés de la suspension.

- la raideur longitudinale (ou horizontale) est assurée par l'élasticité de la lame 1 dans son plan (voir la figure 3), ainsi que la raideur en translation des axes 13 parallèlement à leur longueur. Par exemple, si l'articulation gauche 6G est soumise à des déplacements horizontaux, les parties 1G et 1M de la lame 1 se déforment élastiquement dans leur plan, tandis que l'axe 13 de l'organe de fixation 4G se translate parallèlement à lui-même. La lame 1 se déforme dans le plan horizontal pour prendre la position 1". Il peut en résulter un léger déplacement de l'articulation 6D.

On comprend donc aisément que le contrôle des paramètres :

-raideur verticale en 6G et 6D

-raideur longitudinale en 6G et 6D

-trajectoires des articulations 6G et 6D dans les plans vertical et horizontal et,

-déplacement induit de 6G sur 6D et réciproquement,

peut être obtenu par un choix judicieux de :

- la raideur en rotation des organes de fixation 4G et 4D autour de leur axe 13

- la raideur en translation parallèlement à lui-même de l'axe 13 des organes de fixation 4G et 4D

- la position des organes 4G et 4D le long de la lame 1 et

- la répartition de la raideur de la lame 1 sur sa longueur, à la fois dans le plan vertical et dans le plan horizontal, c'est-à-dire de la répartition dans ces plans des produits I x E, avec I = moment d'inertie et E = module d'élasticité.

Comme il a été mentionné ci-dessus, les raideurs en rotation et en translation des organes 4G et 4D sont facilement ajustables grâce à la structure lamifiée desdits organes, tandis que la répartition longitudinale de la raideur de la lame 1 est obtenue de façon judicieuse par une réalisation dans laquelle ladite lame présente une section constante mais une épaisseur et une largeur variables, cette dernière particularité facilitant du reste la fabrication de la lame. Enfin, la position desdits organes 4G et 4D le long de la lame peut également être aisément choisie en fonction des besoins.

Le mode de réalisation de suspension selon l'invention, montré par la figure 4, concerne le train avant d'une voiture automobile à traction avant. Les roues 2G et 2D comportent un moyeu 19 monté dans une fusée 20 et entraîné en rotation par un arbre de transmission 21, transmettant le mouvement de la boîte de vitesse 22. A sa partie supérieure la fusée 20 est rendue solidaire de la partie inférieure de l'amortisseur télescopique 7G ou 7D, par l'intermédiaire d'une bride 23. La partie inférieure de la fusée 20 est supportée par l'extrémité de la lame 1, par l'intermédiaire de l'articulation à rotule 6G ou 6D correspondante.

On voit ainsi que grâce à la présente invention, on peut obtenir une suspension simple et particulièrement légère, apportant un net gain en coût et en poids, et donc en consommation de carburant, au véhicule sur lequel elle est montée.

REVENDICATIONS

1.- Suspension pour un train de deux roues 2G,2D d'un véhicule, comprenant une lame élastique (1) transversale audit véhicule, disposée à plat et s'étendant de façon continue sur toute la largeur du véhicule pour pouvoir supporter la partie inférieure de la fusée 20 d'une desdites roues à chacune de ses extrémités, des moyens amortissseurs étant prévus pour amortir les mouvements verticaux desdites roues,
caractérisée en ce que ladite lame (1) est en une seule pièce réalisée en une matière composite fibres-résine synthétique et est fixée sur le châssis (3) dudit véhicule par deux organes de fixation 4G, 4D espacés le long de la partie intermédiaire 1M de ladite lame et permettant la transmission des déformations verticales subies par chacune des extrémités 1G ou 1D de la lame de sorte que les déformations induites dans l'autre desdites extrémités soient de même sens et en ce que les moyens amortisseurs sont constitués par des amortisseurs télescopiques 7G,7D disposés parallèlement au plan de la roue associée et reliant chacun au châssis (3) la partie supérieure d'une desdites fusées (20) de roue.

2.- Suspension selon la revendication 1, caractérisée en ce que ladite lame (1) de matière composite présente, sur sa longueur, une section de surface constante, mais une largeur et une épaisseur variable.

3.-Suspension selon la revendication 2, caractérisée en ce que dans la partie intermédiaire 1M de la lame, la largeur, l'épaisseur et la surface de la section sont constantes, tandis que pour chacune des extrémités 1G et 1D de la lame l'épaisseur augmente et la largeur diminue en s'éloignant de la partie intermédiaire 1M, la surface de la section restant dans les extrémités 1G et 1M constamment égale à celle de la partie intermédiaire 1M.

4.- Suspension selon l'une quelconque des revendications 1 à 3, caractérisée en ce que chaque organe de fixation 4G et 4D de la lame (1) sur le châssis (3) comporte un équipage oscillant (9,10,11,12) rendu solidaire de ladite lame (1) et pouvant pivoter autour d'un axe (13) parallèle au plan de la lame 1 et de direction transversale à celle-ci.

5.- Suspension selon l'une quelconque des revendications 1 à 4, caractérisée en ce que chacun desdits organes de fixation 4G et 4D de la lame élastique (1) au châssis (3) permet la transmission des déformations horizontales subies par une extrémité (1G) ou (1D) de la lame (1) au moins à la partie intermédiaire 1M de celle-ci et éventuellement à l'autre extrémité 1D ou 1G.

6.- Suspension selon les revendications 4 et 5, caractérisée en ce que ledit équipage oscillant (9,10,11,12) peut se déplacer le long dudit axe transversal à la lame.

7.- Suspension selon la revendication 6, caractérisée en ce que l'équipage oscillant (9,10,11,12) de chaque organe de fixation 4G ou 4D comporte une chape (12) traversée par ledit axe (13) et en ce que ledit axe (13) est relié au châssis (3) par deux paliers coniques de conicités opposées, les parties desdits paliers associées audit axe (13) étant constituées par des bagues (14) traversées par celui-ci et des moyens de serrage (17,18) étant prévus pour presser simultanément les bagues (14) contre les parties (15) desdits paliers associées au châssis (3) et contre la chape (12) , tandis que chacun des paliers coniques (14,15) est choisi pour permettre un certain déplacement longitudinal de l'axe (13), même lorsque les bagues (14) sont en appui contre les parties (15).

8.- Lame élastique de rappel élastique et de couplage anti-roulis de deux roues d'un train de roues d'un véhicule, montées aux extrémités de ladite lame, caractérisée en ce qu'elle est constituée d'une seule pièce (1) d'une matière composite fibres-résine synthétique présentant, sur toute sa longueur, une section de surface constante et, au moins à ses extrémités, une largeur et une épaisseur variables.

*Fig:1*

*Fig:2*

*Fig:3*

Fig.4

*Fig. 5*

*Fig. 6*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DESIGN ENGINEERING, vol. 51, no. 9, septembre 1980, pages 33-38, Waseca, Minn. (USA); J.A.VACCARI: "What's new in materials for '81 cars". *Page 33, colonne de gauche, avant-dernier paragraphe; page 34, figure 2* | 1,2,8 | B 60 G 11/08<br>B 60 G 11/42<br>F 16 F 1/18 |
| | --- | | |
| A | FR-A-1 589 805 (TOYOTA) *En entier* | 1,4,5 | |
| | --- | | |
| A | GB-A-2 041 489 (COURTAULDS) *En entier* | 1,2,8 | |
| | --- | | |
| A | FR-A-2 364 165 (WASSMER AVIATION) *En entier* | 1,2,8 | **DOMAINES TECHNIQUES RECHERCHES (Int. Cl. ³)** |
| | --- | | |
| A | US-A-3 913 932 (GUERRIERO) *Colonne 1, ligne 54 - colonne 3, ligne 46; figures 1-4* | 1,4-7 | B 60 G<br>F 16 F |
| | --- | | |
| A | US-A-3 181 641 (HADDAD) *Figures 1-3* | 1,4-7 | |
| | --- | | |
| A | DE-A-2 927 486 (DAIMLER BENZ) *Page 11, avant-dernier paragraphe - page 20; figures 1-14* | 1,4-7 | |
| | --- -/- | | |

Le présent rapport de recherche a été établi pour toutes les revendications

| Lieu de la recherche<br>LA HAYE | Date d'achèvement de la recherche<br>24-02-1983 | Examinateur<br>ESPEEL R.P. |
|---|---|---|

Office européen
des brevets

**RAPPORT DE RECHERCHE EUROPEENNE**

0089858
Numéro de la demande

EP 83 40 0001

| | DOCUMENTS CONSIDERES COMME PERTINENTS | Page 2 | |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | GB-A-1 224 196 (VAUXHALL) *Page 3, ligne 31 - page 5, ligne 64; figures 1-11* | 1-6 | |
| | --- | | |
| A | FR-A- 684 280 (RENAULT) *Page 2, résumé; figure 3* | 7 | |
| | --- | | |
| A | FR-A-1 597 358 (FIAT) | | |
| | --- | | |
| A | FR-A-1 293 498 (FIAT) | | |
| | --- | | |
| A | FR-A-1 079 423 (RENAULT) | | |
| | --- | | DOMAINES TECHNIQUES RECHERCHES (Int. Cl. ³) |
| A | US-A-3 913 941 (GUERRIERO) | | |
| | --- | | |
| A | DE-B-1 190 810 (DAIMLER BENZ) | | |
| | ----- | | |

| Le présent rapport de recherche a été établi pour toutes les revendications | | |
|---|---|---|
| Lieu de la recherche **LA HAYE** | Date d'achèvement de la recherche **24-02-1983** | Examinateur **ESPEEL R.P.** |